# EUROPEAN PATENT APPLICATION

(11) **EP 3 087 814 A1**
(43) Date of publication of application: **02.11.2016**
(21) Application number: 15197721.2
(22) Date of filing: 03.12.2015
(51) Int. Cl.: A01B 1/06

(54) **ROTARY TILLER DEVICE WITH INTERCHANGEABLE TORQUEING APPARATUS AND ROTARY SHANK**

(30) Priority: 27.04.2015 US 201562153093 P; 02.09.2015 US 201514843227
(71) Applicant: Marken, Frederick R., Hornbrook, CA 96044 (US)
(72) Inventor: MARKEN, Frederick R., Hornbrook, CA California 96044 (US)
(74) Representative: Appleyard Lees IP LLP

(57) **Abstract**

A rotary tiller device provides at least one interchangeable torqueing apparatus 108 to generate different torques and angular velocities for tilling soil and removing weeds with at least one interchangeable rotary shank 112. The type, size, and voltage of the torqueing apparatus is dictated by the type of soil and nature of the work being performed. The interchangeable rotary shank is also interchangeably attached based on the type of soil and tilling requirements. The device is lightweight and portable. The device includes a hollow shaft 102 having a power end 104 and a rotary end 110. The power end is adapted to interchangeably couple to the torqueing apparatus and includes a control portion 106 for regulating the torqueing apparatus. The rotary end includes the rotary shank that rotatably engages the soil. A gear portion transmits torque from the torqueing apparatus to the rotary shank through a rotatable rod 120. A handle 116 helps in controlling the device.

## Description

### Field of the Invention

The present invention relates generally to a rotary tiller device and more particularly it relates to a rotary tiller device that utilizes at least one interchangeable torqueing apparatus and at least one interchangeable rotary shank.

### Background of the Invention

Power-driven earth-working devices have long been used in the art of farming and agriculture. Common soil tilling devices are relatively large and may include devices mounted on a tractor or may include gas engine powered devices on wheels. Light-weight, portable, handheld soil working tools, which require less expenditure of energy by an operator while increasing his productivity are, however, known in the prior art. These devices are often inefficient and limited to only a few applications. Also, the tool blades or rotary shanks are generally of fixed length shape and design and rotate at a fixed speed. Such devices are not adaptable for more than a small number of gardening uses, thus severely limiting the applications of the device.

Thus there is a need for a simple yet multi-purpose gardening device that comprises at least one interchangeable torqueing apparatus to generate variable torque and speed and at least one interchangeable rotary shank for different gardening application in different conditions.

Numerous innovations for gardening devices have been provided in the prior art as described below. Even though these innovations may be suitable for the specific purposes to which they address, however, they differ from the present invention.

For example, U.S. Pat. No. 2,823,597 to Kelsey, U.S. Pat. No. 4,049,059 to Weibling, U.S. Pat. No. 4,213,504 to Schneider, U.S. Pat. No. 4,305,470 to Anderson, U.S. Pat. No. 5,048,617 to Haven, U.S. Pat. No. 5,810,093 to Howard, U.S. Pat. No. 6,227,317 to Severns, U.S. Pat. No. 6,722,444 to McKill, U.S. Pat. No. 6,955,227 to Motosko, and U.S. Pat. Pub. No. 2015/0034391 to McLain describe devices for soil tilling, weeding, lawn edging or other gardening devices that use a fixed or interchangeable electric motor or a power tool or any other torqueing apparatus, however they fail to teach about a multipurpose gardening device having an interchangeable torqueing apparatus as well as one or more quick interchangeable rotary shanks, wherein the rotary shanks and the torqueing apparatus are connected by an interchangeable rotatable rod.

It is apparent now that numerous innovations for gardening devices have been provided in the prior art that are adequate for various purposes. Furthermore, even though these innovations may be suitable for the specific purposes to which they address, accordingly, they would not be suitable for the purposes of the present invention as heretofore described. Thus a simple yet capable of executing multipurpose gardening device that comprises at least one interchangeable torqueing apparatus to generate variable torque and speed and at least one interchangeable rotary shank for different gardening application in different conditions is needed. Further inexpensive, portable and simple design of the present invention allows a user to operate, control and manage the device effectively. Even to attach and detach the interchangeable rotary shank and the torqueing apparatus require no skill and training, thus it is easy to use and store.

### Summary of the Invention

The present invention discloses about a rotary gardening device and more particularly it relates to a rotary tiller device that utilizes at least one interchangeable torqueing apparatus and at least one interchangeable rotary shank.

According to the present invention the device comprises a hollow shaft having a power end and a rotary end; at least one torqueing apparatus, wherein the torqueing apparatus is configured to interchangeably couple to the power end of the shaft; a control portion, wherein the control portion is operatively connected to the power end of the shaft and is configured to regulate the at least one torqueing apparatus; a power source, wherein the power source is configured to provide power to the at least one torqueing apparatus; at least one rotary shank, wherein the rotary shank is configured to interchangeably couple to the rotary end of the shaft and the rotary shank is disposed at perpendicular direction to the length of the shaft; a gear portion, the gear portion configured to transmit the torque generated by the at least one torqueing apparatus to the at least one rotary shank so as to rotate the rotary shank about the axis of the shaft; and a rotatable rod disposed along the length of the cavity of the hollow shaft, wherein the rotatable rod is configured to rotatably carry the torque from the at least one torqueing apparatus to the gear portion, further the torque and rotations per minute of the at least one rotary shank is adjustable, depending on the type and voltage of the at least one torqueing apparatus.

In accordance with one aspect of the present invention, a portable rotary tiller device is provided with interchangeable torqueing apparatus and interchangeable rotary shank, the device comprising, a hollow shaft having a power end and a rotary end, further the shaft comprises a laterally extending handle for enabling additional controllability of the device; at least one torqueing apparatus, wherein the torqueing apparatus is configured to interchangeably couple to the power end of the shaft; a control portion, wherein the control portion is operatively connected to the power end of the shaft and is configured to regulate the at least one torqueing apparatus; a power source, wherein the power source is configured to provide power to the at least one torqueing apparatus; at least two rotary shanks, wherein each of the rotary shanks comprise central axle which are configured to interchangeably couple to either ends of the rotary end of the shaft for rotatable attachment; a gear portion, the gear portion configured to transmit the torque generated by the at least one torqueing apparatus to the at least two rotary shanks connected to opposing ends of an axle passing through the gear portion, so as to rotate the rotary shanks about the axis of the shaft; and a rotatable rod disposed along the length of the cavity of the hollow shaft, wherein the rotatable rod is configured to rotatably carry the torque from the at least one torqueing apparatus to the gear portion, further the torque and rotations per minute of the at least two rotary shanks are adjustable, depending on the type and voltage of the at least one torqueing apparatus

Another aspect of the present invention is to provide a rotary tiller device with interchangeable torqueing apparatus and interchangeable rotary shank, the device comprising a hollow shaft having a first end and a second end, further the shaft comprises a handle for enabling additional controllability of the device; at least one torqueing apparatus, wherein the torqueing apparatus configured to fixedly or interchangeably couple to the second end of the shaft, the at least one torqueing apparatus further configured to generate a torque; a control portion, wherein the control portion is operatively connected to the first end of the shaft and is configured to regulate the at least one torqueing apparatus; a power source, wherein the power source is configured to provide power to the at least one torqueing apparatus; and at least one rotary shank, wherein the rotary shank is configured to interchangeably couple to the torqueing apparatus, further the torque and rotations per minute of the at least one rotary shank is adjustable, depending on the type and voltage of the at least one torqueing apparatus.

Another aspect of the present invention is to provide a portable rotary tiller device with interchangeable torqueing apparatus and interchangeable rotary shank, the device that includes: a hollow shaft having a power end and a rotary end, further the shaft includes a laterally extending handle for enabling additional controllability of the device; at least one torqueing apparatus, wherein the torqueing apparatus is a power tool configured to interchangeably couple to the power end of the shaft, the torqueing apparatus including a quick connect that couples to a hexagonal head at the end of the rotatable rod; a control portion, wherein the control portion is operatively connected to the power end of the shaft and is configured to regulate the at least one torqueing apparatus, the control portion including a spring biased power switch and an emergency cut off switch; a power source, wherein the power source is a rechargeable battery and is configured to provide power to the at least one torqueing apparatus; at least two rotary shanks, wherein each of the rotary shanks comprise central axle which are configured to interchangeably couple to either ends of the rotary end of the shaft for rotatable attachment; a gear portion, the gear portion configured to transmit the torque generated by the at least one torqueing apparatus to the at least two rotary shanks connected to the gear portion facing opposite to each other at the rotary end of the shaft, so as to rotate the rotary shanks about the axis of the shaft; and a rotatable rod disposed along the length of the cavity of the hollow shaft, wherein the rotatable rod is configured to rotatably carry the torque from the at least one torqueing apparatus to the gear portion, further the torque and rotations per minute of the at least two rotary shanks are adjustable, depending on the type and voltage of the at least one torqueing apparatus.

A further aspect of the present invention is to provide a rotary tiller device with fixed torqueing apparatus and interchangeable rotary shank, the device including a shaft having a first end and a second end, further the shaft includes a handle at the first end of the shaft for enabling additional controllability of the device; at least one torqueing apparatus, wherein the torqueing apparatus is a power tool configured to fixedly couple to the second end of the shaft, the at least one torqueing apparatus further configured to generate variable torques and operates at multiple speeds; a control portion, wherein the control portion is operatively connected to the first end of the shaft and is configured to regulate the at least one torqueing apparatus, the control portion comprises a spring biased power switch and an emergency cut off switch; a power source, wherein the power source is a rechargeable battery configured to provide power to the at least one torqueing apparatus; and at least one rotary shank, wherein the rotary shank is configured to interchangeably couple to the torqueing apparatus, further the torque and rotations per minute of the at least one rotary shank is adjustable, depending on the type and voltage of the at least one torqueing apparatus, and the at least one rotary shank comprises a fixed or detachable axle that is interchangeably couple to the at least one torqueing apparatus.

It is an object of the present invention is to provide a gardening device wherein the interchangeable torqueing apparatus of the gardening device is a power tool, so that different torqueing apparatus capable of generating variable torques and speeds can be interchangeably used for different purpose of gardening applications.

It is another object of the present invention is to provide a gardening device wherein the one or more interchangeable rotary shanks having different shape, size and strength are interchangeably used for different purpose of gardening applications.

It is another object of the present invention is to provide a rechargeable battery as a power source to the torqueing apparatus and the torqueing apparatus is controlled by a control portion comprising a spring biased power switch and an emergency cut off switch.

It is still another object of the present invention is to provide a portable rotary tiller device with interchangeable torqueing apparatus and interchangeable rotary shank for different purpose of gardening applications without using a rotatable shaft or rod.

Other features and aspects of the invention will become apparent from the following detailed description, taken in conjunction with the accompanying drawings, which illustrate, by way of example, the features in accordance with embodiments of the invention. The summary is not intended to limit the scope of the invention, which is defined solely by the claims attached hereto.

### Brief Description of the Drawings

The invention will now be described, by way of example, with reference to the accompanying drawings, in which:
FIG. 1 illustrates a side view of an exemplary rotary tiller device with an interchangeable torqueing apparatus and an interchangeable rotary shank, in accordance with an embodiment of the present invention;
FIG. 2 illustrates a perspective view of an exemplary interchangeable torqueing apparatus coupling to a rotatable rod, in accordance with an embodiment of the present invention;
FIG. 3 illustrates a side view of rotary end of the shaft in accordance with an embodiment of the present invention;
FIG. 4 illustrates a perspective view of an exemplary rotary shank in accordance with an embodiment of the present invention;
FIG. 5 illustrates a perspective view of an exemplary interchangeable rotary shank connected to the rotary end of the shaft in accordance with an embodiment of the present invention;
FIG. 6 illustrates a perspective view of an alternate exemplary embodiment of the invention showing two interchangeable rotary shanks connected to the rotary end 110 of the shaft in accordance with an embodiment of the present invention; and
FIG. 7 illustrates a perspective view of an exemplary rotary tiller device with a fixed torqueing apparatus and an interchangeable rotary shank at one end of a shaft, in accordance with an embodiment of the present invention.

Like reference numerals refer to like parts throughout the various views of the drawings.

### Detailed Description of the Invention

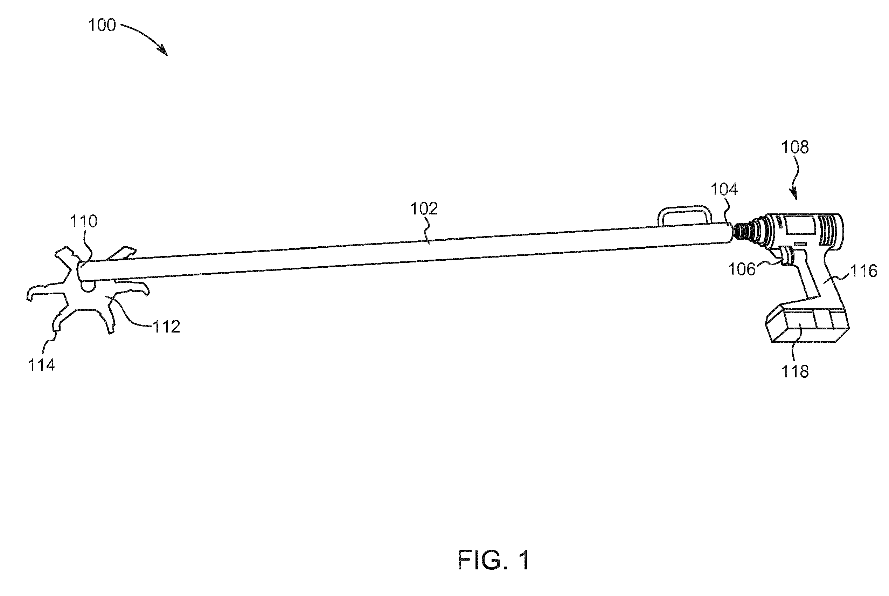

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper," "lower," "left," "rear," "right," "front," "vertical," "horizontal," and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Specific dimensions and other physical characteristics relating to the embodiments disclosed herein are therefore not to be considered as limiting, unless the claims expressly state otherwise.

A rotary tiller device 100 with interchangeable torqueing apparatus 108 and interchangeable rotary shank 112 is referenced in FIGs.1 - 3. The rotary tiller device 100 provides at least one interchangeable torqueing apparatus 108 to generate different amounts of torque for tilling soil and removing weeds with at least one interchangeable rotary shank 112. The rotary tiller device 100, hereafter, "device 100", is configured to be pushed and pulled by a single person and used as an all-purpose gardening tool.

The tilling capacity of the device 100 is adaptable based on the type and voltage of the interchangeable torqueing apparatus 108. The interchangeable rotary shank 112 is selected and interchangeably attached to the device 100, depending on the type of soil and tilling requirements. The torqueing apparatus 108 and the rotary shank 112 are sufficiently sized and dimensioned, such that the device 100 is lightweight, portable, and storable.

One aspect of a rotary tiller device 100 with interchangeable torqueing apparatus 108 and rotary shank 112, comprises:
a shaft 102, the shaft 102 defined by a power end 104, a rotary end 110, a cavity, and an outer surface;
at least one torqueing apparatus 108, the at least one torqueing apparatus 108 configured to interchangeably couple to the power end 104 of the shaft 102, the at least one torqueing apparatus 108 further configured to generate a torque;
a control portion 106, the control portion 106 disposed to operatively connect to the power end 104 of the shaft 102, the control portion 106 configured to regulate the at least one torqueing apparatus 108;
at least one rotary shank 112, the at least one rotary shank 112 defined by a plurality of teeth 114, the at least one rotary shank 112 configured to interchangeably couple to the rotary end 110 of the shaft 102, the at least one rotary shank 112 further configured to rotate about the axis of the shaft 102, the at least one rotary shank 112 further configured to rotate at a torque and a rotations per minute commensurate with the torque generated by the at least one torqueing apparatus 108,
wherein the torque and rotations per minute of the at least one rotary shank 112 is adjustable, depending on the type and voltage of the at least one torqueing apparatus 108;
a gear portion, the gear portion configured to transmit the torque generated by the at least one torqueing apparatus 108 to the at least one rotary shank 112;
a rotatable rod 120, the rotatable rod 120 disposed to extend along the length of the cavity of the shaft 102, the rotatable rod 120 configured to rotatably carry the torque from the at least one torqueing apparatus 108 to the gear portion; and a power source 118, the power source 118 configured to provide power to the at least one torqueing apparatus 108.

Another aspect of the portable rotary tiller device 100 with interchangeable torqueing apparatus 108 and rotary shank 112, comprises:
a hollow shaft 102 having a power end 104 and a rotary end 110, further the shaft 102 comprises a laterally extending handle 116 for enabling additional controllability of the device 100;
at least one torqueing apparatus 108, wherein the torqueing apparatus 108 is configured to interchangeably couple to the power end 104 of the shaft 102;
a control portion 106, wherein the control portion 106 is operatively connected to the power end of the shaft 104 and is configured to regulate the at least one torqueing apparatus 108;
a power source 118, wherein the power source 118 is configured to provide power to the at least one torqueing apparatus 108;
at least two rotary shanks 112, wherein each of the rotary shank 112 comprise central axle 123 which are configured to interchangeably couple to either ends of the rotary end 110 of the shaft 102 for rotatable attachment;
a gear portion (not shown), the gear portion configured to transmit the torque generated by the at least one torqueing apparatus 108 to the at least two rotary shanks 112 connected to the gear portion facing opposite to each other at the rotary end 110 of the shaft 102, so as to rotate the rotary shanks 112 about the axis of the shaft 102; and
a rotatable rod 120 disposed along the length of the cavity of the hollow shaft 102, wherein the rotatable rod 120 is configured to rotatably carry the torque from the at least one torqueing apparatus 108 to the gear portion, further the torque and rotations per minute of the at least two rotary shanks 112 are adjustable, depending on the type and voltage of the at least one torqueing apparatus 108.

In another aspect, the device 100 is a garden tiller.

In another aspect, the at least one torqueing apparatus 108 is a power tool.

In another aspect, the at least one torqueing apparatus 108 generates variable torques and operates at multiple speeds.

In another aspect, the at least one torqueing apparatus 108 comprises a quick connect that couples to a hexagonal head at the end of the rotatable rod 120.

In another aspect, the at least one rotary shank 112 is generally star-shaped.

In another aspect, the at least one rotary shank 112 comprises a central axle that is configured to interchangeably couple to the rotary end 110 of the shaft 102 for rotatable attachment.

In another aspect, the control portion 106 comprises a spring biased power switch and an emergency cut off switch.

In another aspect, the power source 118 is a rechargeable battery.

In another aspect, the outer surface of the shaft 102 comprises a laterally extending handle 116.

One objective of the present invention is to provide a lightweight, portable garden tiller.

Another objective is to enable the device 100 to operate on different types of soil and tilling operations by interchanging an appropriate torqueing apparatus 108 and rotary shank 112.

Yet another objective is to provide an electrical, lightweight power source 118 to eliminate the need for heavy, loud gas motors.

Yet another objective is to provide an easy to manufacture and inexpensive garden tiller for small-garden uses.

As referenced in FIG. 1, the device 100 includes a hollow shaft 102 having a power end 104, a rotary end 110, a cavity, and an outer surface. The power end 104 of the shaft 102 is adapted to interchangeably couple to a torqueing apparatus 108, such as a power drill, a rotary hammer, or any automated rotary mechanism that generates sufficient torque and RPM to translate into tilling functions at a rotary shank 112. The type, size, and voltage of the selected torqueing apparatus 108 is dictated by the type of soil and nature of the work being performed.

A rotatable rod 120 extends through the cavity of the shaft 102, connecting the torqueing apparatus 108 to a gear portion (not shown) at the rotary end 110 of the shaft 102. The rotatable rod 120 carries the torque from the power end 104 to the rotary end 110 of the shaft 102. The gear portion transmits the torque to the rotary shank 112. In this manner, the rotary shank 112 may engage the soil with sufficient torque and RPM to perform the tilling function.

The power end 104 also includes a control portion 106 that is configured to control the torqueing apparatus 108, and manipulate the device 100 as a whole. In this manner, one-handed control of the device 100 is possible with a power switch, a handle 116, and a battery. In one embodiment, the control portion 106 comprises a spring biased power switch and an emergency cut off switch.

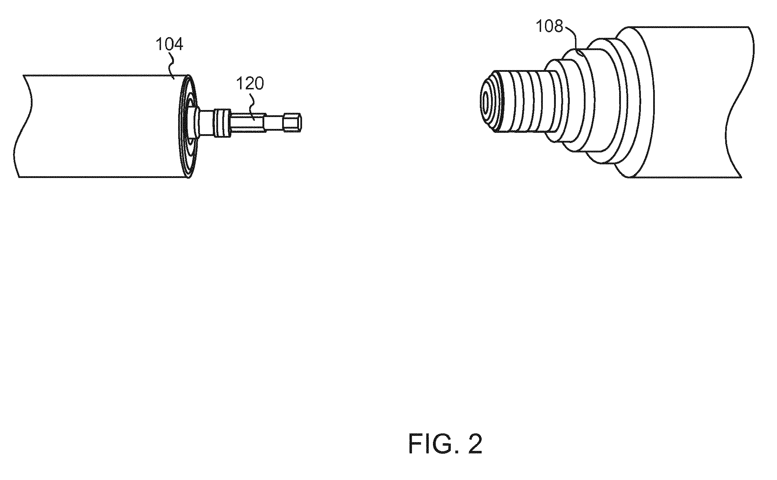

The torqueing apparatus 108 easily attaches and detaches from the power end 104 of the shaft 102. The selected torqueing apparatus 108 depends on the type of soil and the nature of the tilling operation. For example, a simple weeding project may require a torqueing apparatus 108, such as a one 4 volt power drill, which is known in the art to engage nuts and bolts. A more thorough job, such as aerating the soil for preparation of a garden, may, however, utilize a 18 volt or 20 volt standard drill or impact hammer to provide sufficient torque to the rotary shank 112. This is because the rotary shank 112 must dig deeper into the soil for aerating than for surface weeding. FIG. 2 illustrates the torqueing apparatus 108 having a quick connect that couples to a hexagonal head of a rotatable rod 120 in the power end 104 of the shaft 102. The quick connect easily attaches and detaches for facilitating interchangeability with multiple torqueing apparatuses 108.

Consequently, because the torqueing apparatus 108 is generally small, lightweight, and interchangeable, the device 100 easily carries and stores. Furthermore, the interchangeable nature of the torqueing apparatus 108 enables the device 100 to be scalable for different tasks. In any case, the generally small, lightweight characteristics of the torqueing apparatus 108 enable the device 100 to be lightweight and portable. In one possible embodiment, the device 100 is about two pounds in weight. In other embodiments, the torqueing apparatus 108 itself may, however, be two pounds.

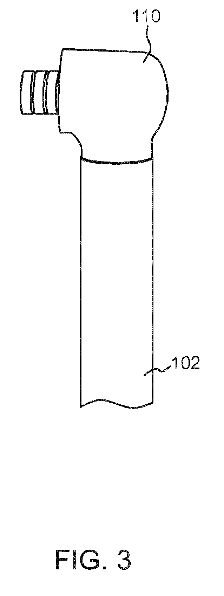

FIG. 3 shows a side view of the rotary end 110 of the shaft 102. The rotary end 110 of the shaft 102 comprises tool quick connect 121 for interchangeably attaching the rotary shank 112. The hollow shaft 102 comprises a gear portion (not shown) at the rotary end 110 of the shaft 102 that facilitates conversion of longitudinal rotational motion of the rotatable rod 120 into transverse rotational motion of the rotary shank 112.

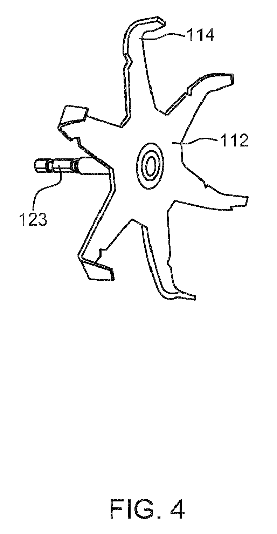

FIG. 4 illustrates a perspective view of an exemplary rotary shank 112 in accordance with an embodiment of the present invention. The rotary shank 112 comprises plurality of teeth 114 that are spaced-apart and generally sharp to help till the soil and weeds, as needed and an axle 123, wherein the axle 123 quickly and interchangeably connects to the tool quick connect 121 at the rotary end 110 of the shaft 102. The rotary shank 112 may be star-shaped. In one embodiment, the rotary shank 112 is about 6" in diameter. Suitable materials for the rotary shank 112 may include, without limitation, steel, aluminum, and metal alloys.

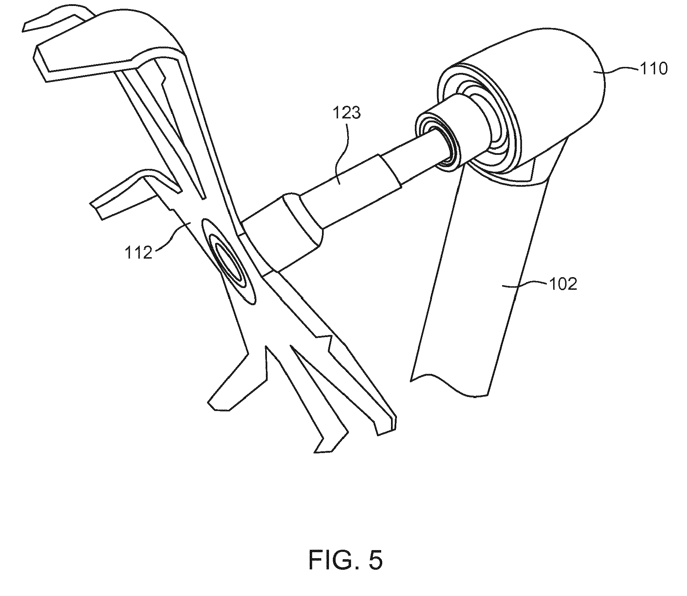

FIG. 5 illustrates a perspective view of an exemplary interchangeable rotary shank 112 connected to the rotary end 110 of the shaft 102 in accordance with an embodiment of the present invention. The rotary shank 112 having the central axle 123, which facilitates its quick attachment to the quick connect 121 at the rotary end 110 of the shaft 102.

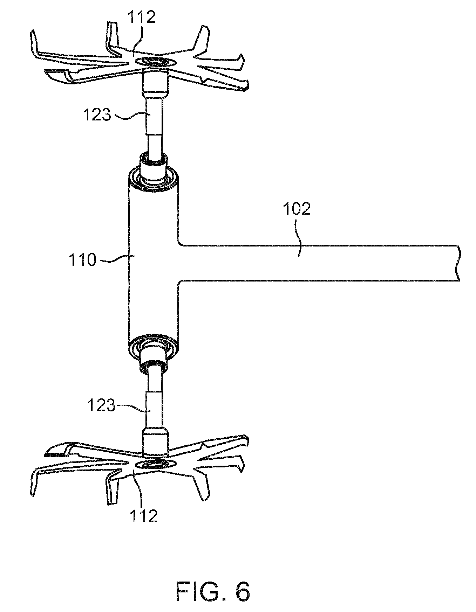

FIG. 6 illustrates a perspective view of an alternate exemplary embodiment of the invention showing two interchangeable rotary shanks 112 connected to the rotary end 110 of the shaft 102 in accordance with an embodiment of the present invention, wherein each of the rotary shank's central axle are configured to interchangeably couple to either ends of the rotary end of the shaft for rotatable attachment. The distance between the shanks 112 can be increased or decreased by adjusting or using suitable lengths of axle 123.

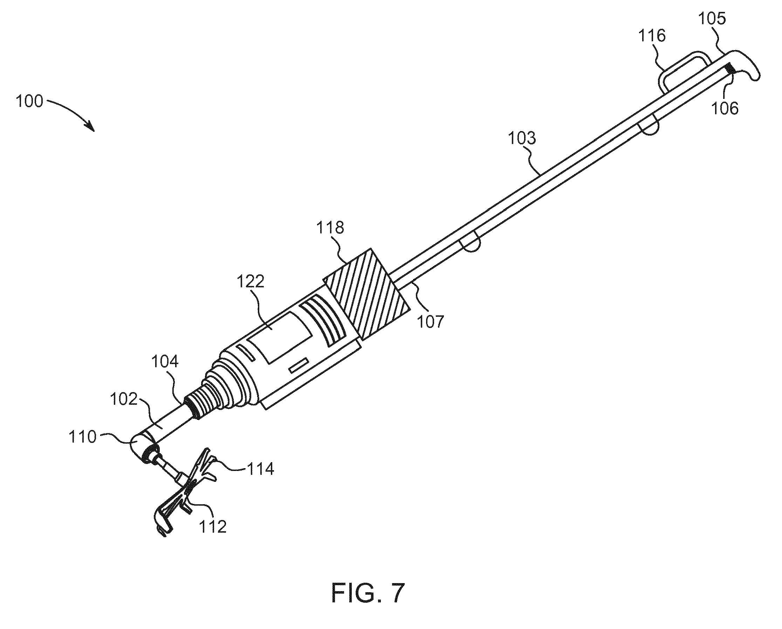

In an another alternate embodiment of the invention as shown in FIG. 7, the device 100' comprises a shaft 102' having a first end 104' and a second end 110', further the shaft 102' comprises at least one handle 116' at the first end 104' of the shaft 102' for enabling additional controllability of the device 100'; at least one torqueing apparatus 122, wherein the torqueing apparatus 122 configured to fixedly couple to the second end 110' of the shaft 102', the at least one torqueing apparatus 122 further configured to generate a torque; a control portion 106', wherein the control portion 106' is operatively connected to the first end 104' of the shaft 102' and is configured to regulate the at least one torqueing apparatus 122; a power source 118', wherein the power source 118' is configured to provide power to the at least one torqueing apparatus 122; and at least one rotary shank 112', wherein the rotary shank 112' is configured to interchangeably couple to the torqueing apparatus 122, further the torque and rotations per minute of the at least one rotary shank 112' is adjustable, depending on the type and voltage of the at least one torqueing apparatus 122. The fixed torqueing apparatus 122 still generates torque for rotation of the rotary shank 112', many of the interchangeability advantages are not, however, available. The fixed torqueing apparatus 122 does, however, eliminate the problems of misplacement or broken coupling mechanisms that make the device 100 inoperable. And the fixed torqueing apparatus 122 may also generate a greater amount of torque than the smaller, interchangeable torqueing apparatus 108. In this fixed configuration, the fixed torqueing apparatus 122 may include a built in motor powered by battery, gas, or solar energy.

In some embodiments, the torqueing apparatus 108 may have its own power source 118. In some embodiments, the shaft 102 has a built in power source 118 that can be used, however, to power the torqueing apparatus 108. The power source 118 may include, without limitation, a rechargeable battery, a lithium-ion battery pack, a solar panel, and a power socket that receives power from an external power source 118. Those skilled in the art will recognize that the generally electrical, lightweight characteristics of the power source 118 eliminate the need for heavy, loud gas motors.

The rotary end 110 of the shaft 102 includes a gear portion and an operatively connected rotary shank 112. The gear portion transmits the torque generated by the torqueing apparatus 108 to the rotary shank 102. The type and voltage of the torqueing apparatus 108 is selected, such that the rotary shank 102 rotates with sufficient torque and RPM, depending on the type of soil and nature of the work being performed. For example, the diameter, material composition, and shape of the rotary shank 112 can be selected depending on the type of tilling, aerating, cutting, etc., that is required.

In one possible embodiment, a cavity of the hollow shaft 102 carries a rotatable rod 120 between the torqueing apparatus 108 and the gear portion, such that the rotary shank 102 is in communication with the control portion 106 of the device 100. Thus, by manipulation of a power switch in the control portion 106, the rotary shank 102 is operable. The shaft 102 may also include an outer surface that supports a laterally disposed handle 116 for enabling additional controllability of the device 100. In other embodiments, the handle 116 may, however, attach directly onto the torqueing apparatus 108, such as a grip for a power tool.

These and other advantages of the invention will be further understood and appreciated by those skilled in the art by reference to the following written specification, claims and appended drawings.

Because many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims and their legal equivalence.

## Claims

1. A portable rotary tiller device with interchangeable torqueing apparatus and interchangeable rotary shank, the device comprising:
a hollow shaft having a power end and a rotary end;
at least one torqueing apparatus, wherein the torqueing apparatus is configured to interchangeably couple to the power end of the shaft;
a control portion, wherein the control portion is operatively connected to the power end of the shaft and is configured to regulate the at least one torqueing apparatus;
a power source, wherein the power source is configured to provide power to the at least one torqueing apparatus;
at least one rotary shank, wherein the rotary shank is configured to interchangeably couple to the rotary end of the shaft and the rotary shank is disposed at perpendicular direction to the length of the shaft;
a gear portion, the gear portion configured to transmit the torque generated by the at least one torqueing apparatus to the at least one rotary shank so as to rotate the rotary shank about the axis of the shaft; and
a rotatable rod disposed along the length of the cavity of the hollow shaft, wherein the rotatable rod is configured to rotatably carry the torque from the at least one torqueing apparatus to the gear portion, further the torque and rotations per minute of the at least one rotary shank is adjustable, depending on the type and voltage of the at least one torqueing apparatus.

2. The device of claim 1, wherein the at least one torqueing apparatus is a power tool.

3. The device of claim 1, wherein the at least one torqueing apparatus generates variable torques and operates at multiple speeds.

4. The device of claim 1, wherein the at least one torqueing apparatus comprises a quick connect that couples to a hexagonal head at the end of the rotatable rod.

5. The device of claim 1, wherein the at least one rotary shank is generally star-shaped.

6. The device of claim 1, wherein the at least one rotary shank comprises a central axle that is configured to quick interchangeably couple to the rotary end of the shaft for rotatable attachment.

7. The device of claim 1, wherein the control portion comprises a spring biased power switch and an emergency cut off switch.

8. The device of claim 1, wherein the power source is a rechargeable battery.

9. The device of claim 1, wherein the outer surface of the shaft comprises a laterally extending handle for enabling additional controllability of the device.
